# EUROPÄISCHE PATENTANMELDUNG

(11) **EP 4 134 497 A1**
(43) Veröffentlichungstag der Anmeldung: **15.02.2023**
(21) Anmeldenummer: 22189078.3
(22) Anmeldetag: 05.08.2022
(51) Int. Cl.: E04D 13/00, E06B 3/00, E05F 15/00, G06F 11/00, G05B 23/02

(54) **VERFAHREN ZUM BETREIBEN EINER SENSORANORDNUNG EINES GEBÄUDEVERSCHLUSSELEMENTS, VERFAHREN ZUM BETREIBEN EINES NETZWERKS AUS SENSORANORDNUNGEN MEHRERER GEBÄUDEVERSCHLUSSELEMENTE, SENSORANORDNUNG FÜR EIN GEBÄUDEVERSCHLUSSELEMENT SOWIE GEBÄUDEVERSCHLUSSELEMENT**

(30) Priorität: 11.08.2021 DE 102021208793
(71) Anmelder: Roto Frank Dachsystem-Technologie GmbH, 97980 Bad Mergentheim (DE)
(72) Erfinder: DRES, Martin, 97996 Niederstetten (DE)
(74) Vertreter: Dietz, Christopher Friedrich

(57) **Zusammenfassung**

Die Erfindung betrifft ein Verfahren zum Betreiben einer Sensoranordnung (8) eines Gebäudeverschlusselements (3), wobei die Sensoranordnung (8) wenigstens einen Zustandsgrößensensor zur Erfassung einer Zustandsinformation des Gebäudeverschlusselements (3) aufweist. Dabei ist vorgesehen, dass nach einem Montagevorgang des Gebäudeverschlusselements (3) eine Trainingsbetriebsart durchgeführt wird, während welcher die Zustandsinformation mittels des Zustandsgrößensensors ermittelt und als Referenzinformation hinterlegt wird, wobei nach dem Hinterlegen der Referenzinformation aus der Trainingsbetriebsart in eine Überwachungsbetriebsart gewechselt wird, während welcher wenigstens einmalig die Zustandsinformation mittels des Zustandsgrößensensors ermittelt und mit der Referenzinformation verglichen wird, wobei bei einem Abweichen der ermittelten Zustandsinformation von der hinterlegten Referenzinformation ein Fehlersignal erzeugt wird. Die Erfindung betrifft weiterhin ein Verfahren zum Betreiben eines Netzwerks (11) aus Sensoranordnungen (8) mehrerer Gebäudeverschlusselemente (3), eine Sensoranordnung (8) für ein Gebäudeverschlusselement (3) sowie ein Gebäudeverschlusselement (3).

## Beschreibung

Die Erfindung betrifft ein Verfahren zum Betreiben einer Sensoranordnung eines Gebäudeverschlusselements, wobei die Sensoranordnung wenigstens einen Zustandsgrößensensor zur Erfassung einer Zustandsinformation des Gebäudeverschlusselements aufweist. Die Erfindung betrifft weiterhin ein Verfahren zum Betreiben eines Netzwerks aus Sensoranordnungen mehrerer Gebäudeverschlusselemente, eine Sensoranordnung für ein Gebäudeverschlusselement sowie ein Gebäudeverschlusselement mit einer Sensoranordnung.

Aus dem Stand der Technik ist beispielsweise die Druckschrift US 10,689,898 B2 bekannt. Diese beschreibt ein ferngesteuertes Türschließbetriebssystem, das auf einem zentralen Server mit einer Backend-Datenbank basiert, die mehrere steuerbare Türen und mehrere autorisierte Benutzer sowie entsprechende Berechtigungsnachweise enthält. Eine Türschnittstelleneinheit ist dazu vorgesehen, mit einem autorisierten Benutzer zu kommunizieren, um einen Live-Videostream einer jeweiligen Tür zu liefern und Türöffnungs- und -schließbefehle von dem autorisierten Benutzer auszuführen. Ein mobiles Gerät verfügt über ein Benutzeranwendungsprogramm, das dazu vorgesehen ist, mit dem zentralen Server und der Türschnittstelleneinheit zu interagieren, um Konfigurationsdaten zu erhalten, den autorisierten Benutzer zu authentifizieren, den Live-Videostream zu empfangen und Türöffnungs- und -schließbefehle einzuleiten. Die sichere Durchführung des Türöffnungs-/-schließvorgangs wird durch eine maximierte Verwendung der Videoüberwachung vor und während des Vorgangs und durch die Durchführung separater Sicherheitsauthentifizierungen für Videostreaming und Türbetriebsanforderungen unterstützt.

Es ist Aufgabe der Erfindung, ein Verfahren zum Betreiben einer Sensoranordnung eines Gebäudeverschlusselements vorzuschlagen, welches gegenüber bekannten Verfahren Vorteile aufweist, insbesondere eine zuverlässige Fehlererkennung ermöglicht.

Dies wird erfindungsgemäß mit einem Verfahren zum Betreiben einer Sensoranordnung eines Gebäudeverschlusselements mit den Merkmalen des Anspruchs 1 erreicht. Dabei ist vorgesehen, dass nach einem Montagevorgang des Gebäudeverschlusselements eine Trainingsbetriebsart durchgeführt wird, während welcher die Zustandsinformation mittels des Zustandsgrößensensors ermittelt und als Referenzinformation hinterlegt wird, wobei nach dem Hinterlegen der Referenzinformation aus der Trainingsbetriebsart in eine Überwachungsbetriebsart gewechselt wird, während welcher wenigstens einmalig die Zustandsinformation mittels des Zustandsgrößensensors ermittelt und mit der Referenzinformation verglichen wird, wobei bei einem Abweichen der ermittelten Zustandsinformation von der hinterlegten Referenzinformation ein Fehlersignal erzeugt wird.

Vorteilhafte Ausgestaltungen mit zweckmäßigen Weiterbildungen der Erfindung sind in den abhängigen Ansprüchen angegeben.

Das Verfahren dient zum Betreiben der Sensoranordnung, welche Bestandteil des Gebäudeverschlusselements ist. Das Gebäudeverschlusselement kann Bestandteil eines Gebäudes sein, jedoch selbstverständlich zumindest bis zu seiner Montage an dem Gebäude auch separat von diesem vorliegen. Das Gebäude weist eine Gebäudehülle auf, zur Anordnung an beziehungsweise in welcher das Gebäudeverschlusselement vorgesehen und ausgestaltet ist. Die Gebäudehülle liegt zwischen einer Außenumgebung des Gebäudes und einem Innenraum des Gebäudes vor, separiert diese also voneinander. Die Gebäudehülle ist vorzugsweise als Wand des Gebäudes oder als Dach des Gebäudes ausgestaltet. Das Gebäudeverschlusselement dient dem zumindest zeitweisen Verschließen des Gebäudes, insbesondere dem zumindest zeitweisen Verschließen einer in der Gebäudehülle ausgebildeten Ausnehmung. Die Ausnehmung, welche mithilfe des Gebäudeverschlusselements zumindest zeitweise verschlossen ist, liegt insoweit entweder als Wandöffnung oder als Dachöffnung vor.

Die Wand ist insbesondere als Außenwand beziehungsweise Außenmauer des Gebäudes ausgestaltet. Das Dach setzt sich hingegen im Wesentlichen aus einer Dachkonstruktion und einer Dachhaut zusammen. Die Dachkonstruktion weist beispielsweise einen oder mehrere Dachsparren sowie eine oder mehrere Dachlatten auf. Die Dachlatten können hierbei in Konterlatten und Traglatten unterteilt werden, wobei das Vorliegen der Konterlatten rein optional ist. Die Traglatten sind üblicherweise angewinkelt, insbesondere senkrecht, zu den Dachsparren angeordnet und an diesen befestigt. Die Konterlatten verlaufen hingegen bevorzugt bezüglich der Traglatten angewinkelt, insbesondere senkrecht zu ihnen, und/oder parallel oder zunächst im Wesentlichen parallel zu den Dachsparren.

Die Dachhaut ist außenseitig an der Dachkonstruktion angeordnet beziehungsweise befestigt, begrenzt die Dachkonstruktion also in Richtung der Außenumgebung. Unter der Dachhaut ist insbesondere eine Dachdeckung oder eine Dachabdichtung zu verstehen. Die Dachdeckung weist beispielsweise eine Vielzahl von Dachziegeln, Dachsteinen, Dachschindeln oder dergleichen auf. Nach innen, also in Richtung des Innenraums, wird die Dachkonstruktion bevorzugt von einer Innenwand begrenzt. Die Innenwand ist hierzu an der Dachkonstruktion auf ihrer dem Innenraum zugewandten Seite angeordnet und/oder befestigt. Beispielsweise ist das Gebäudeverschlusselement über ein Innenfutter an die Innenwand angebunden.

Das Gebäudeverschlusselement ist bevorzugt als Tür oder als Fenster ausgestaltet. Das Fenster kann hierbei ein Dachfenster beziehungsweise Dachflächenfenster, insbesondere ein Wohndachfenster beziehungsweise ein Wohndachflächenfenster oder ein Oberlicht, oder alternativ ein Fassadenfenster sein. Alternativ kann das Gebäudeverschlusselement ein Rollladen beziehungsweise eine Verschattungseinrichtung sein. Das Gebäudeverschlusselement kann zum lichtdurchlässigen oder lichtundurchlässigen Verschließen der Ausnehmung ausgestaltet sein. Ist das Gebäudeverschlusselement lichtdurchlässig, so verfügt es insbesondere über eine Verglasung, welche beispielsweise als Einfachverglasung oder als Mehrfachverglasung, insbesondere als Doppelverglasung oder als Dreifachverglasung, vorliegt.

Das Gebäudeverschlusselement weist vorzugsweise einen oder mehrere Rahmen auf. Der Rahmen beziehungsweise jeder der Rahmen verfügt über mehrere Rahmenholme. Die Rahmenholme sind aneinander befestigt, nämlich derart, dass sie einen Bereich des Gebäudeverschlusselements zwischen sich aufnehmen. Die Rahmenholme bilden insoweit einen geschlossenen Rahmen. Der Rahmen beziehungsweise die mehreren Rahmenholme sind insbesondere derart ausgestaltet, dass sie die Ausnehmung der Gebäudehülle übergreifen und/oder abdecken. Vorzugsweise sind die Rahmenholme derart angeordnet und ausgestaltet, dass sie gemeinsam mit der Verglasung die Ausnehmung zumindest zeitweise vollständig verschließen. Hierzu wird die Verglasung bevorzugt von dem Rahmen getragen. Beispielsweise ist sie hierbei von den mehreren Rahmenholmen eingefasst.

Das Gebäudeverschlusselement kann permanent geschlossen sein, also zum permanenten Verschließen der Ausnehmung ausgestaltet sein. In diesem Fall verfügt es beispielsweise über lediglich einen einzigen Rahmen, welcher starr mit der Gebäudehülle verbunden ist. Es kann jedoch auch vorgesehen sein, dass das Gebäudeverschlusselement geöffnet und geschlossen werden kann. In diesem Fall weist es vorzugsweise mehrere Rahmen auf, wobei einer der Rahmen als Blendrahmen und ein anderer der Rahmen als Flügelrahmen ausgestaltet ist. Der Flügelrahmen ist bezüglich des Blendrahmens verlagerbar, insbesondere verschwenkbar. Liegt der Flügelrahmen vor, so ist die Verglasung bevorzugt an diesem befestigt und wird lediglich mittelbar über den Flügelrahmen von dem Blendrahmen getragen. Entsprechend ist die Verglasung gemeinsam mit dem Flügelrahmen bezüglich des Blendrahmens verlagerbar beziehungsweise verschwenkbar.

Die Sensoranordnung des Gebäudeverschlusselements verfügt über den wenigstens einen Zustandsgrößensensor. Mithilfe des Zustandsgrößensensors wird zumindest zeitweise die Zustandsinformation des Gebäudeverschlusselements erfasst, insbesondere gemessen. Es kann vorgesehen sein, dass die Sensoranordnung lediglich einen einzigen Zustandsgrößensensor zur Erfassung lediglich einer einzigen Zustandsinformation aufweist. Es kann jedoch auch vorgesehen sein, dass mittels des Zustandsgrößensensors mehrere unterschiedliche Zustandsinformationen erfasst werden, oder dass mehrere Zustandsgrößensensoren vorliegen, mittels welchen mehrere unterschiedliche Zustandsinformationen erfassbar sind. Allgemeiner ausgedrückt verfügt die Sensoranordnung über einen oder mehrere Zustandsgrößensensoren, mittels welchen eine oder mehrere Zustandsinformationen zumindest zeitweise erfasst beziehungsweise gemessen werden. Unter der Zustandsinformation ist eine das Gebäudeverschlusselement beschreibende Information beziehungsweise eine einen Zustand des Gebäudeverschlusselements beschreibende Information zu verstehen. Beispielsweise erfasst der Zustandsgrößensensor die Zustandsinformation unmittelbar an dem Gebäudeverschlusselement oder in einer unmittelbaren Umgebung des Gebäudeverschlusselements, beispielsweise in der Außenumgebung und/oder in dem Innenraum.

In einer ersten Variante der Erfindung wird nach dem Montagevorgang des Gebäudeverschlusselements die Trainingsbetriebsart durchgeführt. Unter dem Montagevorgang ist ein Vorgang zu verstehen, bei welchem das Gebäudeverschlusselement mit dem Gebäude verbunden wird. Der Montagevorgang erfolgt an einem Montageort, welche insbesondere mit einem Standort des Gebäudes übereinstimmt. Unter dem Montagevorgang ist insbesondere ein Vorgang ab einem - optionalen - Entfernen einer das Gebäudeverschlusselement zumindest teilweise einschließenden Verpackung bis hin zu einer endgültigen Anordnung des Gebäudeverschlusselements in der Ausnehmung der Gebäudehülle zu verstehen. Der Montagevorgang beginnt insoweit mit dem Entfernen der Verpackung, falls eine solche vorgesehen ist, beispielsweise mit einem Beginn des Entfernens der Verpackung oder unmittelbar nach dem vollständigen Entfernen der Verpackung. Er endet, sobald das Gebäudeverschlusselement in der Ausnehmung der Gebäudehülle angeordnet und dort befestigt ist.

Im Rahmen der Trainingsbetriebsart wird die Zustandsinformation unter Verwendung des Zustandsgrößensensors ermittelt beziehungsweise gemessen. Diese Zustandsinformation wird als Referenzinformation festgehalten und in der Sensoranordnung zwischengespeichert beziehungsweise hinterlegt. Vorzugsweise erfolgt das Ermitteln der Zustandsinformation während ein definierter Betriebsvorgang des Gebäudeverschlusselements vorgenommen wird. Unter dem Betriebsvorgang ist beispielsweise ein Öffnen oder ein Schließen des Gebäudeverschlusselements, das Einstellen eines Verschattungsgrads mittels einer Verschattungseinrichtung des Gebäudeverschlusselements oder dergleichen zu verstehen. Durch das Ermitteln der Zustandsinformation und ihr Hinterlegen als Referenzinformation wird der Sollzustand des Gebäudeverschlusselements festgehalten, während welchem ein normaler Betrieb des Gebäudeverschlusselements ohne Beeinträchtigung, beispielsweise durch einen Defekt, eine Beschädigung oder dergleichen, erfolgt.

Ist die Referenzinformation hinterlegt, so wird auf die Überwachungsbetriebsart umgeschaltet. Auch während der Überwachungsbetriebsart wird - analog zu der Trainingsbetriebsart - die Zustandsinformation unter Verwendung des Zustandsgrößensensors ermittelt, insbesondere gemessen. Sie wird jedoch nicht als Referenzinformation hinterlegt. Vielmehr wird sie mit der hinterlegten Referenzinformation verglichen. Stellt sich bei diesen Vergleichen heraus, dass die ermittelte Zustandsinformation von der hinterlegten Referenzinformation abweicht, so wird davon ausgegangen, dass das Gebäudeverschlusselement eine Beeinträchtigung, insbesondere einen Defekt oder eine Beschädigung, aufweist und entsprechend wird das Fehlersignal erzeugt.

Mithilfe der beschriebenen Vorgehensweise ist ein einfaches und zuverlässiges Erkennen auf die Beeinträchtigung möglich. Insbesondere kann die Diagnose des Gebäudeverschlusselements durch bordeigene Mittel vorgenommen werden, sodass also nicht notwendigerweise eine Begutachtung des Gebäudeverschlusselements durch ein Servicetechniker notwendig ist. Vielmehr erfolgt das Erkennen der Beeinträchtigung selbsttätig durch die Sensoranordnung beziehungsweise das Gebäudeverschlusselement.

In einer zweiten Variante der Erfindung ist die Sensoranordnung Bestandteil mehrerer Sensoranordnungen beziehungsweise des Netzwerks aus Sensoranordnungen. Entsprechend ist das Gebäudeverschlusselement Bestandteil mehrerer Gebäudeverschlusselemente, sodass insgesamt das Netzwerks aus Sensoranordnungen mehrerer Gebäudeverschlusselemente besteht und das Verfahren zum Betreiben dieses Netzwerks vorgesehen und ausgestaltet ist. Jede der Sensoranordnungen verfügt über jeweils wenigstens einen Zustandsgrößensensor zur Erfassung der Zustandsinformation des jeweiligen Gebäudeverschlusselements. Jede der Sensoranordnungen ist gemäß den Ausführungen zu der Sensoranordnung im Rahmen dieser Beschreibung ausgestaltet, sodass auf diese verwiesen wird.

Das Verfahren gemäß der zweiten Variante der Erfindung zeichnet sich dadurch aus, dass, insbesondere nach einem jeweiligen Montagevorgang, für die Gebäudeverschlusselemente mithilfe des jeweiligen Zustandsgrößensensors ein die jeweilige Zustandsinformation des entsprechenden Gebäudeverschlusselements ermittelt wird, wobei im Falle einer Wartung eines ersten der Gebäudeverschlusselemente ein Wartungsparameter erfasst und mit der für das erste Gebäudeverschlusselement ermittelten Zustandsinformation korreliert wird, und wobei anhand der Korrelation für wenigstens ein zweites der Gebäudeverschlusselemente aus dem mittels der jeweiligen Sensoranordnung ermittelten Zustandsinformation der Wartungsparameter bestimmt wird. Hinsichtlich der Gebäudeverschlusselemente wird ebenfalls auf die weiteren Ausführungen im Rahmen dieser Beschreibung verwiesen. Jedes der Gebäudeverschlusselemente ist entsprechend dieser Ausführungen ausgestaltet.

Für die Gebäudeverschlusselemente wird mithilfe der jeweiligen Sensoranordnung beziehungsweise des jeweiligen Zustandsgrößensensors die jeweilige Zustandsinformation ermittelt. Die Zustandsinformation betrifft hierbei jeweils dasjenige Gebäudeverschlusselement, welchem die Sensoranordnung beziehungsweise der Zustandsgrößensensor zugeordnet ist. Die Zustandsinformation wird insoweit beispielsweise mehrfach und insoweit periodisch erfasst oder aber stets auf einen aktuellen Stand gebracht. Die Zustandsinformation kann hierbei beispielsweise einem aktuellen Wert der Zustandsgröße entsprechen, welcher mithilfe des Zustandsgrößensensors gemessen wird. Die Zustandsinformation kann jedoch auch ein Zustandsgrößenverlauf sein, welcher den Verlauf des Werts der Zustandsgröße über der Zeit beschreibt.

Wird für eines der Gebäudeverschlusselemente, welches nachfolgend als erstes Gebäudeverschlusselement bezeichnet wird, eine Wartung durchgeführt, so wird für das erste Gebäudeverschlusselement der Wartungsparameter erfasst. Unter der Wartung ist insbesondere ein Vorgang zu verstehen, bei welchem der Servicetechniker das Gebäudeverschlusselement in Augenschein nimmt und dessen Zustand beurteilt und gegebenenfalls notwendige Instandsetzungs- beziehungsweise Reparaturmaßnahmen durchführt. Alternativ ist die Wartung auch eine Rückmeldung des Benutzers des Gebäudeverschlusselements selbst, beispielsweise ein Anruf bei einer Servicehotline. Im Rahmen der Wartung wird der Wartungsparameter erfasst, insbesondere wird er eingegeben, beispielsweise durch den Servicetechniker. Der Wartungsparameter beschreibt hierbei insbesondere den Zustand des Gebäudeverschlusselements vor der Wartung. Beispielsweise umfasst der Wartungsparameter das Auftreten einer bestimmten Beeinträchtigung, beispielsweise eines bestimmten Defekts und/oder einer bestimmten Beschädigung.

Konkret beschreibt der Wartungsparameter insbesondere den Zustand des Gebäudeverschlusselements. Im einfachsten Fall beschreibt der Wartungsparameter, ob eine Reparatur notwendig ist oder nicht. Der Wartungsparameter wird bei der Durchführung der Wartung des Gebäudeverschlusselements erfasst, welche beispielsweise auf Aufforderung eines Benutzers des Gebäudeverschlusselements vorgenommen wird. In diesem Zuge kann der die Wartung vornehmende Servicetechniker den Zustand des Gebäudeverschlusselements beurteilen und in Form des Wartungsparameters bereitstellen.

Der Wartungsparameter kann selbstverständlich lediglich eine einzige Komponente des Gebäudeverschlusselement betreffen. Bevorzugt ist es jedoch vorgesehen, dass der Wartungsparameter mehrere Einzelparameter umfasst, welche unterschiedliche Komponenten des Gebäudeverschlusselement betreffen beziehungsweise deren Zustand beschreiben. Alternativ kann es vorgesehen sein, dass im Rahmen der Wartung mehrere unterschiedliche Wartungsparameter eingegeben werden, die die unterschiedlichen Komponenten des Gebäudeverschlusselements betreffen beziehungsweise beschreiben. Sofern im Rahmen dieser Beschreibung lediglich auf den Wartungsparameter eingegangen wird, so sind die Ausführungen stets analog für die mehreren Einzelparameter beziehungsweise die mehreren Wartungsparameter heranzuziehen, ohne dass separat hierauf hingewiesen werden muss.

Das Erfassen des Wartungsparameters erfolgt vorzugsweise mittels einer entsprechenden Eingabeeinrichtung. Die Eingabeeinrichtung kann an dem Gebäudeverschlusselement selbst vorliegen beziehungsweise Bestandteil der jeweiligen Sensoranordnung sein. Besonders bevorzugt ist es jedoch vorgesehen, dass die Eingabeeinrichtung ein Mobilgerät ist, welches beispielsweise von dem Servicetechniker mitgeführt wird. Bevorzugt wird zum Erfassen des Wartungsparameters sowohl eine Kennung des Gebäudeverschlusselements als auch der Wartungsparameter selbst beziehungsweise dessen Wert abgefragt beziehungsweise eingegeben. Das Abfragen beziehungsweise Eingeben der Kennung kann das manuelle Eingeben der Kennung umfassen oder aber beispielsweise das Einscannen einer an dem Gebäudeverschlusselement angebrachten Markierung, insbesondere eines QR-Codes-Codes. Mithilfe der Kennung kann der Wartungsparameter dem Gebäudeverschlusselement zugeordnet werden. Hierzu ist die Kennung bevorzugt einzigartig.

Der eingegebene Wartungsparameter beziehungsweise dessen Wert wird mit der Zustandsinformation korreliert. Unter der Zustandsinformation ist hierbei konkret die für das erste Gebäudeverschlusselement vorliegende Zustandsinformation zu verstehen, also desjenigen Gebäudeverschlusselements, für welches auch der Wartungsparameter eingegeben wird. Das Korrelieren erfolgt bevorzugt durch maschinelles Lernen und/oder das Durchführen einer Regressionsanalyse beziehungsweise einer Regression. Im Rahmen der Regression dient der Wartungsparameter beziehungsweise dessen Wert als Regressand und die Zustandsinformation als Regressor. Als Regression wird beispielsweise eine lineare Regression verwendet.

Im Rahmen des Korrelierens wird also, beispielsweise mittels der Regression, der Wartungsparameter in Beziehung zu der Zustandsinformation gesetzt. Hieraus ergibt sich eine Korrelation, die nachfolgend genutzt werden kann beziehungsweise genutzt wird, um aus der Zustandsinformation auf den Wartungsparameter beziehungsweise dessen Wert zu schließen. Die Regression wird vorzugsweise mittels eines neuronalen Netzwerks vorgenommen. Grundsätzlich kann hierbei Deep Learning Verwendung finden, um besonders aussagekräftige Ergebnisse zu erzielen. Bevorzugt erfolgt das Eingeben des Wartungsparameters und das Korrelieren desselben mit der Zustandsinformation im Rahmen der Trainingsbetriebsart.

Es kann vorgesehen sein, für jedes der Gebäudeverschlusselemente eine separate Korrelation zu bestimmen und diese abzulegen beziehungsweise abzuspeichern. Bevorzugt werden jedoch die Zustandsinformation und der Wartungsparameter zumindest mehrerer Gebäudeverschlusselemente oder sogar aller Gebäudeverschlusselemente herangezogen, um die Korrelation zu ermitteln. Die Korrelation ergibt sich insoweit aus mehreren oder allen Zustandsinformation und Wartungsparametern der Gebäudeverschlusselemente. Vorzugsweise ist es vorgesehen, die Korrelation jeweils unter Verwendung der Zustandsinformation und des Wartungsparameters desjenigen Gebäudeverschlusselement zu verbessern, für welche der Wartungsparameter ermittelt beziehungsweise erfasst wurde. Insoweit basiert die Korrelation auf den Zustandsinformationen und den Wartungsparametern aller Gebäudeverschlusselemente, für welche der Wartungsparameter bereits erfasst wurde.

Vorstehend wurde erläutert, dass der Wartungsparameter mehrere Einzelparameter umfassen oder mehrere Wartungsparameter vorliegen können. Vorzugsweise wird für unterschiedliche Parameter, also für unterschiedliche Einzelparameter oder unterschiedliche Wartungsparameter, jeweils eine separate Korrelation ermittelt und hinterlegt. Es kann also vorgesehen sein, dass nicht lediglich ein einziger Wartungsparameter ausgewertet wird, sondern stattdessen mehrere Wartungsparameter. In diesem Fall ist bevorzugt jedem der Wartungsparameter eine separate Korrelation zugeordnet, welche insbesondere in der Trainingsbetriebsart ermittelt beziehungsweis verbessert wird. Hierdurch ist die Überwachung der mehreren unterschiedlichen Wartungsparameter mit hoher Zuverlässigkeit möglich. Insbesondere werden die mehreren Korrelationen nachfolgend verwendet, um die unterschiedlichen Wartungsparameter beziehungsweise Einzelparameter aus der jeweiligen Zustandsinformation abzuleiten, insbesondere der Zustandsinformation des zweiten Gebäudeverschlusselements. Hierdurch ist eine Vorhersage möglich, welche Komponente des Gebäudeverschlusselements voraussichtlich gewartet werden muss.

Die Korrelation wird schlussendlich verwendet, um für ein anderes der Gebäudeverschlusselemente aus der für dieses ermittelten Zustandsinformation den dazugehörigen Wartungsparameter zu bestimmen. Dieses andere Gebäudeverschlusselement kann auch als zweites Gebäudeverschlusselement bezeichnet werden. Das zweite Gebäudeverschlusselement ist insbesondere von dem ersten Gebäudeverschlusselement verschieden. Vorzugsweise ist das zweite Gebäudeverschlusselement ein Gebäudeverschlusselement, für welches der Wartungsparameter noch nicht erfasst wurde oder vor dem Wartungsparameter des ersten Gebäudeverschlusselements erfasst wurde. Insoweit ist der Wartungsparameter des zweiten Gebäudeverschlusselements entweder noch nicht hinterlegt oder aber er ist älter als der Wartungsparameter des ersten Gebäudeverschlusselements. Entsprechend werden die Daten des ersten Gebäudeverschlusselements, nämlich der für dieses eingegebene Wartungsparameter und die ermittelten Zustandsinformation herangezogen, um auf den Wartungsparameter des zweiten Gebäudeverschlusselements zu schließen, nämlich über den Umweg der Korrelation.

Idealerweise basiert die Korrelation auf einer Mehrzahl von Wartungsparameter unterschiedlicher Gebäudeverschlusselemente und der entsprechenden Zustandsinformation, sodass die Korrelation auf Grundlage einer umfangreichen Datenbasis ermittelt wird und entsprechend aussagekräftig ist. Das bedeutet, dass der Wartungsparameter für das zweite Gebäudeverschlusselement oder für mehrere zweite Gebäudeverschlusselemente mit hoher Genauigkeit bestimmt werden kann. Das Bestimmen des Wartungsparameters aus der ermittelten Zustandsinformation erfolgt insbesondere im Rahmen der Überwachungsbetriebsart. Vorzugsweise ist es also vorgesehen, das Verfahren zunächst in der Trainingsbetriebsart zu trainieren und anschließend die Überwachungsbetriebsart durchzuführen. Zusätzlich oder alternativ ist es vorgesehen, in Abhängigkeit der erfassten Daten entweder die Trainingsbetriebsart oder die Überwachungsbetriebsart durchzuführen. Insbesondere ist es vorgesehen, die Trainingsbetriebsart durchzuführen, falls der Wartungsparameter eingegeben wird. Wird hingegen die Zustandsinformation ohne Wartungsparameter erfasst, so wird die Überwachungsbetriebsart durchgeführt und aus der erfassten Zustandsinformation der Wartungsparameter bestimmt. So wird die Korrelation mit der Zeit, nämlich mit fortschreitender Anzahl an Eingaben des Wartungsparameters, fortlaufend verbessert.

In anderen Worten wird in der Trainingsbetriebsart der erfasste Wartungsparameter mit der Zustandsinformation korreliert, sodass sich die Korrelation ergibt. In der Überwachungsbetriebsart wird hingegen der Wartungsparameter beziehungsweise dessen Wert aus der Zustandsinformation ermittelt. Entspricht der bestimmte Wert des Wartungsparameters einem ersten Wert oder liegt in einem ersten Bereich, so wird davon ausgegangen, dass das zweite Gebäudeverschlusselement keine Wartung benötigt. Entspricht hingegen der Wert einem von dem ersten Wert verschiedenen zweiten Wert oder liegt in einem von dem ersten Bereich verschiedenen zweiten Bereich, so wird angenommen, dass eine Wartung durchgeführt werden muss. In letzterem Fall wird beispielsweise ein Servicetechniker mit der Wartung betraut. Hierdurch ist eine vorausschauende Erkennung auf mögliche Beeinträchtigungen des Gebäudeverschlusselements realisiert.

Besonders bevorzugt werden die beiden Varianten des Verfahrens in Kombination miteinander verwendet. Beispielsweise ist es vorgesehen, die erste Variante zum Erkennen auf eine notwendige Wartung eines konkreten der Gebäudeverschlusselemente zu verwenden. Wird die Wartung für dieses Gebäudeverschlusselement vorgenommen, so wird der Wartungsparameter erfasst und fließt zusammen mit der für dieses Gebäudeverschlusselement ebenfalls vorliegenden Zustandsinformation in die Korrelation ein. Nachfolgend kann unter Verwendung der Korrelation für ein anderes der Gebäudeverschlusselemente erkannt werden, ob für dieses eine ähnliche Konstellation vorliegt, also ob ebenfalls das Auftreten der Beeinträchtigung droht.

Dieses Auftreten kann für das weitere Gebäudeverschlusselement bereit prädiktiv, also vorausschauend, erfasst werden, sodass es erst gar nicht zu dem Auftreten der Beeinträchtigung kommen kann. Insoweit ergänzen sich die beiden Varianten auf besonders vorteilhafte Art und Weise. Besonders bevorzugt betrifft die Erfindung also ein Verfahren zum Betreiben eines Netzwerks im Sinne der zweiten Variante, bei welcher für jede der Sensoranordnungen das Verfahren gemäß der ersten Variante ergänzend herangezogen wird. Bevorzugt wird bei dem Auftreten des Fehlersignals die Wartung desjenigen Gebäudeverschlusselements veranlasst, für welches das Fehlersignal erzeugt wurde. Dieses Gebäudeverschlusselement kann nachfolgend auch als zweites Gebäudeverschlusselement im Sinne der zweiten Variante der Erfindung bezeichnet werden.

Die Ausführungen im Rahmen dieser Beschreibung, welche vorteilhafte Weiterbildungen betreffen, sind grundsätzlich - soweit technisch sinnvoll - soweit auf die erste Variante, die zweite Variante und einen Kombination aus erster Variante und zweiter Variante bezogen. Sie sind insoweit für diese Ausgestaltungen unmittelbar heranziehbar.

Eine Weiterbildung der Erfindung sieht vor, dass als Zustandsinformation ein mittels des Zustandsgrößensensors gemessener Wert einer Zustandsgröße oder ein mittels des Zustandsgrößensensors ermittelter Zustandsgrößenverlauf verwendet wird. Die Zustandsinformation betrifft also entweder konkret genau den einen Wert der Zustandsgröße, welcher zu einem bestimmten Zeitpunkt erfasst wurde. Das Erfassen des Werts erfolgt unter Verwendung des Zustandsgrößensensors, nämlich durch Messen. Alternativ ist die Zustandsinformation ein Zustandsgrößenverlauf, also ein Verlauf der Zustandsgröße über der Zeit. Auch der Zustandsgrößenverlauf wird unter Verwendung des Zustandsgrößensensors ermittelt. Insbesondere erfolgt dies derart, dass der Wert der Zustandsgröße mittels des Zustandsgrößensensors gemessener und dem Zustandsgrößenverlauf hinzugefügt wird, sodass sich eine Abfolge aus Werten der Zustandsgröße über der Zeit ergibt. Der Wert der Zustandsgröße ermöglicht ein präzises Ermitteln des Zustands des Gebäudeverschlusselement zu einem bestimmten Zeitpunkt. Der Zustandsgrößenverlauf hingegen berücksichtigt zusätzlich auch in der Vergangenheit liegende Werte der Zustandsgröße, sodass sich unter Umständen eine verbesserte Vorhersagegenauigkeit für den Wartungsparameter ergibt.

Eine Weiterbildung der Erfindung sieht vor, dass als Zustandsgrößensensor mindestens einer der folgenden Sensoren verwendet wird: Beschleunigungssensor, Magnetfeldsensor, Positionssensor, Drehwinkelsensor, Geräuschsensor, Helligkeitssensor, Temperatursensor, Wärmeflusssensor, Staubsensor, Luftfeuchtigkeitssensor, VOC-Sensor, CO₂-Sensor, O₃-Sensor, Stellgeschwindigkeitssensor und Lidarsensor. Grundsätzlich kann lediglich ein einziger der genannten Sensoren vorliegen. Besonders bevorzugt verfügt die Sensoranordnung beziehungsweise das Gebäudeverschlusselement jedoch über mehrere Zustandsgrößensensoren, sodass entsprechend mehrere der genannten Sensoren vorliegen.

Der Beschleunigungssensor misst die Beschleunigung des Gebäudeverschlusselements in wenigstens einer Richtung, vorzugsweise in mehreren senkrecht aufeinander stehenden Richtungen, besonders bevorzugt in drei senkrecht aufeinander stehenden Richtungen. Der Magnetfeldsensor beschreibt hingegen das Magnetfeld, welches in der Umgebung des Gebäudeverschlusselements vorliegt. Beispielsweise kann anhand des gemessenen Magnetfelds auf eine Verlagerung der Flügel des Gebäudeverschlusselements gegeneinander erkannt werden. Der Positionssensor dient beispielsweise der Positionsbestimmung anhand eines Satellitennavigationssystems, insbesondere eines globalen Satellitennavigationssystems.

Der Drehwinkelsensor ermittelt den aktuellen Drehwinkel des Gebäudeverschlusselements, insbesondere einen geodätischen Drehwinkel, also eine Drehwinkelstellung im geodätische Bezugssystem. Alternativ entspricht der Drehwinkel einer Drehwinkelstellung der beiden Rahmen zueinander, also insbesondere des zweiten Rahmens bezüglich des ersten Rahmens. Beispielsweise wird der Beschleunigungssensor als Drehwinkelsensor verwendet und aus der auf das Gebäudeverschlusselement wirkenden Beschleunigung auf den Istdrehwinkel geschlossen. Mittels des Geräuschsensors wird ein Geräuschpegel gemessen, der in der Umgebung des Gebäudeverschlusselements vorliegt.

Mithilfe des Helligkeitssensors wird eine Helligkeit, mithilfe des Temperatursensors eine Temperatur, mithilfe des Wärmeflusssensors ein Wärmefluss, mithilfe des Staubsensors eine Staubdichte, mithilfe des Luftfeuchtigkeitssensors eine Luftfeuchtigkeit, mithilfe des VOC-Sensors eine Konzentration von flüchtigen organischen Verbindungen (VOC), mithilfe des CO₂-Sensors eine CO₂-Konzentration, mithilfe des O₃-Sensors eine Ozonkonzentration, mithilfe des Strömungsgeschwindigkeitssensors eine Strömungsgeschwindigkeit von Luft in der Umgebung des Gebäudeverschlusselements und mithilfe des Lidarsensors ein Abstand zu einem Festkörper in der Umgebung des Gebäudeverschlusselements erfasst.

Mindestens eine der genannten Größen dient dazu, Bedingungen zu erkennen, welche zu einer Beschädigung des Gebäudeverschlusselements führen können, sodass die Zustandsgröße den Zustand des Gebäudeverschlusselements widerspiegelt. Auf diese Art und Weise kann eine zuverlässige Überwachung des Betriebszustands des Gebäudeverschlusselements realisiert werden, da auch die Umgebungsbedingungen des Gebäudeverschlusselements beurteilt werden, die dessen Zustand unweigerlich beeinflussen und daher als Zustandsgrößen gelten.

Eine Weiterbildung der Erfindung sieht vor, dass das Gebäudeverschlusselement einen ersten Rahmen und einen bezüglich des ersten Rahmens verlagerbaren zweiten Rahmen aufweist, wobei sowohl während der Trainingsbetriebsart als auch während der Überwachungsbetriebsart die Zustandsinformation während eines Verlagerns des zweiten Rahmens bezüglich des ersten Rahmens ermittelt wird. Das Gebäudeverschlusselement kann entsprechend geöffnet und geschlossen werden. Auf eine solche Ausgestaltung wurde bereits hingewiesen. Das Ermitteln der Zustandsinformation erfolgt während des Verlagerns der beiden Rahmen gegeneinander, sodass eine Überwachung des Öffnungsvorgangs beziehungsweise Schließvorgangs erfolgt. Beispielsweise beschreibt die Zustandsinformation den Drehwinkel der beiden Rahmen gegeneinander über der Zeit oder aber eine Zeit, die zum vollständigen Öffnen beziehungsweise vollständigen Schließen benötigt wird.

Aus dem Drehwinkel, insbesondere einem Verlauf des Drehwinkels, kann auf den Zustand des Gebäudeverschlusselements geschlossen werden. Treten beispielsweise während des Öffnens beziehungsweise Schließens vorübergehende Verzögerungen des Öffnens beziehungsweise Schließens auf, so kann auf eine Beeinträchtigung des Gebäudeverschlusselements geschlossen werden, sodass eine Wartung notwendig ist. Der Drehwinkel der Rahmen gegeneinander wird beispielsweise mithilfe des Drehwinkelsensors ermittelt. Eine solche Vorgehensweise ermöglicht eine zuverlässige und genaue Erkennung auf eine notwendige Wartung des Gebäudeverschlusselements.

Eine Weiterbildung der Erfindung sieht vor, dass der zweite Rahmen zumindest zeitweise mittels eines Aktuators bezüglich des ersten Rahmens verlagert wird. Der Aktuator dient somit einem maschinellen beziehungsweise automatischen Öffnen beziehungsweise Schließen des Gebäudeverschlusselements. Hierdurch wird ein hoher Bedienkomfort für den Benutzer des Gebäudeverschlusselements erzielt.

Eine Weiterbildung der Erfindung sieht vor, dass mittels des Zustandsgrößensensors eine als Zustandsinformation verwendete Zeitdauer ermittelt wird, die zum Verlagern des zweiten Rahmens bezüglich des ersten Rahmens aus einer ersten Stellung bis in eine zweite Stellung benötigt wird. Die erste Stellung und die zweite Stellung sind bevorzugt definierte Stellungen der beiden Rahmen gegeneinander, insbesondere definierte Drehwinkelstellungen. Zu Beginn des Verlagerns steht beispielsweise der zweite Rahmen in der ersten Stellung still, am Ende des Verlagerns steht er in der zweiten Stellung still. Es erfolgt also eine Beschleunigung des zweiten Rahmens aus der ersten Stellung heraus und ein Verzögern des zweiten Rahmens, bis die zweite Stellung erreicht ist. Hierdurch fließen auch ein Beschleunigungsvorgang und/oder ein Verzögerungsvorgang des zweiten Rahmens bezüglich des ersten Rahmens in die Beurteilung des Zustands des Gebäudeverschlusselements ein. Als Zustandsinformation wird diejenige Zeitdauer verwendet, welche benötigt wird, um den zweiten Rahmen aus der ersten Stellung bis in die zweite Stellung zu verlagern. In der Trainingsbetriebsart wird die Zeitdauer hinterlegt. Weicht sie während der Überwachungsbetriebsart von der hinterlegten Zeitdauer ab, so wird auf die Beeinträchtigung des Gebäudeverschlusselements geschlossen und bevorzugt eine Wartung veranlasst.

Eine Weiterbildung der Erfindung sieht vor, dass der erste Rahmen und der zweite Rahmen über wenigstens ein Federelement mechanisch miteinander gekoppelt sind, das bei unterschiedlichen Stellungen der Rahmen zueinander unterschiedliche Federspannungen aufweist, wobei, insbesondere während des Verlagerns des zweiten Rahmens bezüglich des ersten Rahmens, eine Zustandsinformation des Aktuators und/oder eine Stellung des zweiten Rahmens bezüglich des ersten Rahmens als Zustandsinformation ermittelt wird. Das Federelement dient dem Unterstützen des Öffnens des Gebäudeverschlusselements, insbesondere im Falle einer Ausgestaltung des Gebäudeverschlusselements als Dachfenster. Zusätzlich kann das Federelement ein Festsetzen des zweiten Rahmens bezüglich des ersten Rahmens in seiner Offenstellung unterstützen, indem es eine in Richtung der Offenstellung wirkende Federkraft erzeugt. Die Kopplung der beiden Rahmen über das Federelement ist derart ausgestaltet, dass bei unterschiedlichen Stellungen der Rahmen zueinander unterschiedliche Federspannungen des Federelements vorliegen. Üblicherweise ist die Federspannung bei geschlossenem Gebäudeverschlusselement am größten und wird umso kleiner, je weiter das Gebäudeverschlusselement geöffnet wird.

Das Federelement beziehungsweise dessen Federspannung beeinflussen das Öffnen und Schließen des Gebäudeverschlusselements und auch ein Halten der Stellung des zweiten Rahmens bezüglich des ersten Rahmens maßgeblich. Um den Zustand des Federelements zu beurteilen, wird daher, insbesondere während des Verlagerns des zweiten Rahmens bezüglich des ersten Rahmens und/oder im Stillstand des zweiten Rahmens bezüglich des ersten Rahmens, bevorzugt in geöffnetem Zustand, die Zustandsinformation des Aktuators und/oder die Stellung der beiden Rahmen zueinander als Zustandsinformation ermittelt. Weicht die Zustandsinformation von der während der Trainingsbetriebsart erfassten Zustandsinformation ab, so kann auf eine Beeinträchtigung des Federelements und/oder des Aktuators erkannt werden. Als Zustandsinformation des Aktuators wird beispielsweise eine Temperatur des Aktuators und/oder eine während des Verlagerns des zweiten Rahmens auftretende Stromstärke eines dem Aktuator zugeführten elektrischen Stroms verwendet. Die Stellung ist insbesondere eine Drehwinkelstellung und wird beispielsweise mittels eines Drehwinkelsensors erfasst. Hieraus lässt sich äußerst zuverlässig auf eine Beeinträchtigung des Federelements beziehungsweise des Aktuators erkennen.

Eine Weiterbildung der Erfindung sieht vor, dass mithilfe des als Beschleunigungssensor und/oder Drehwinkelsensor ausgestalteten Zustandsgrößensensors ein Schwerkraftvektor beziehungsweise Drehwinkel ermittelt und als Zustandsinformation verwendet wird. Der Schwerkraftvektor beschreibt die geodätische Ausrichtung des Gebäudeverschlusselements. Sie betrifft also die Ausrichtung des Gebäudeverschlusselements im geodätischen Bezugssystem. Der Drehwinkel beschreibt die Ausrichtung des Gebäudeverschlusselements im geodätischen Bezugssystem. Verändert sich der Schwerkraftvektor beziehungsweise der Drehwinkel zwischen der Trainingsbetriebsart und der Überwachungsbetriebsart, so kann darauf geschlossen werden, dass entweder eine Montage des Gebäudeverschlusselements nicht korrekt erfolgt ist oder dass eine Veränderung des Gebäudes zu einer Änderung des Schwerkraftvektors beziehungsweise des Drehwinkels geführt hat. Eine solche Veränderung des Gebäudes kann beispielsweise in Form einer Verformung des Daches auftreten, sodass sich der Neigungswinkel des Daches ändert. Auch hieraus kann sich der Bedarf nach der Wartung ergeben.

Eine Weiterbildung der Erfindung sieht vor, dass mithilfe des als Positionssensor ausgestalteten Zustandsgrößensensors eine Position des Gebäudeverschlusselements ermittelt und als Zustandsinformation verwendet wird. Auch aus der Veränderung der Position des Gebäudeverschlusselement zwischen der Trainingsbetriebsart und der Überwachungsbetriebsart kann ein Wartungsbedarf abgeleitet werden. Eine solche Veränderung resultiert nämlich üblicherweise aus einer unsachgemäßen Montage des Gebäudeverschlusselements oder einer Veränderung des Gebäudes, wie bereits vorstehend beschrieben.

Eine Weiterbildung der Erfindung sieht vor, dass das Gebäudeverschlusselement mit mindestens einem weiteren Gebäudeverschlusselement in Datenübertragungsverbindung steht, wobei bei dem Abweichen der ermittelten Zustandsinformation von der hinterlegten Referenzinformation nur für das Gebäudeverschlusselement ein erstes Fehlersignal als Fehlersignal und bei dem Abweichen der ermittelten Zustandsinformation von der hinterlegten Referenzinformation sowohl für das Gebäudeverschlusselement als auch für das weitere Gebäudeverschlusselement ein zweites Fehlersignal als Fehlersignal verwendet wird.

Die Datenübertragungsverbindung zwischen dem Gebäudeverschlusselement und dem weiteren Gebäudeverschlusselement kann beispielsweise unmittelbar vorliegen. Es kann jedoch auch vorgesehen sein, dass die Datenübertragungsverbindung lediglich mittelbar, beispielsweise über eine Zentralrecheneinrichtung, hergestellt ist. In diesem Fall liegt zwischen dem Gebäudeverschlusselement und der Zentralrecheneinrichtung einerseits sowie zwischen der Zentralrecheneinrichtung und dem weiteren Gebäudeverschlusselement andererseits jeweils eine Datenübertragungsverbindung vor, wobei das Gebäudeverschlusselement und das weitere Gebäudeverschlusselement über diese beiden Datenübertragungsverbindungen aneinander angebunden sind.

Durch die datenübertragungstechnische Anbindung der beiden Gebäudeverschlusselemente aneinander wird eine Beurteilung dahingehend ermöglicht, ob die Abweichung der ermittelten Zustandsinformation von der hinterlegten Referenzinformation nur für das Gebäudeverschlusselement vorliegt oder auch für das zweite Gebäudeverschlusselement. Ist ersteres der Fall, so liegt mit einer hohen Wahrscheinlichkeit eine fehlerhafte Montage vor, sodass gezielt eine Wartung des Gebäudeverschlusselements veranlasst wird. Tritt die Veränderung hingegen für beide Gebäudeverschlusselemente beziehungsweise mehrere Gebäudeverschlusselemente auf, so kann darauf geschlossen werden, sodass ein systemischer Fehler vorliegt, beispielsweise des Gebäudes.

Verändert sich beispielsweise die Position beider Gebäudeverschlusselemente, insbesondere um denselben Betrag und/oder dieselbe Ausrichtung, so kann auf eine Veränderung der Position des gesamten Gebäudes geschlossen werden und entsprechende Maßnahmen eingeleitet werden. Um die beschriebene Vorgehensweise zu realisieren, wird das erste Fehlersignal als Fehlersignal ausgegeben, sofern die Abweichung lediglich das Gebäudeverschlusselement, nicht jedoch das weitere Gebäudeverschlusselement betrifft. Tritt die Abweichung hingegen für beide Gebäudeverschlusselemente auf, so wird das zweite Fehlersignal als Fehlersignal erzeugt. Eine solche Vorgehensweise ermöglicht eine besonders präzise Auswertung der Zustandsinformation.

Eine Weiterbildung der Erfindung sieht vor, dass mittels eines auf einer ersten Seite des Gebäudeverschlusselements angeordneten Schallemitters Schall mit einer bestimmten Schallintensität emittiert und mittels des als Geräuschsensor ausgestalteten Zustandsgrößensensors ein Geräuschpegel des Schalls auf einer der ersten Seite abgewandten zweiten Seite des Gebäudeverschlusselements ermittelt und als Zustandsinformation verwendet wird. Beispielsweise ist der Schallemitter auf einer der Außenumgebung zugewandten Seite des Gebäudeverschlusselements und der Geräuschsensor auf auf einer dem Innenraum zugewandten Seite des Gebäudeverschlusselements angeordnet oder umgekehrt.

Mithilfe des Schallemitters wird Schall ausgesandt, nämlich mit der bestimmten, genau definierten Schallintensität. Auf der zweiten Seite des Gebäudeverschlusselements wird der emittierte Schall mithilfe des Geräuschsensors gemessen und als Geräuschpegel festgehalten. Beispielsweise erfolgt das Emittieren des Schalls bei einer bestimmten Frequenz oder über mehrere Frequenzen hinweg. Es kann auch vorgesehen sein, dass die Frequenz des Schalls während des Emittieren des Schalls verändert wird, insbesondere kontinuierlich oder mit definierten Sprüngen. Weicht der während der Überwachungsbetriebsart ermittelte Geräuschpegel von dem hinterlegten Geräuschpegel ab, also von der Referenzinformation, so kann darauf geschlossen werden, dass eine Veränderung des Gebäudeverschlusselements stattgefunden hat, beispielsweise dass eine (Schall-) Isolierung des Gebäudeverschlusselements sich verschlechtert hat.

Vorzugsweise wird sichergestellt, dass das Emittieren des Schalls und das Erfassen des Geräuschpegels bei einem definierten Zustand des Gebäudeverschlusselements erfolgt, insbesondere bei geschlossenem Gebäudeverschlusselement und definiertem Verschattungsgrad (falls eine Verschattungseinrichtung vorhanden ist). Die beschriebene Vorgehensweise ermöglicht eine zuverlässige Abschätzung des Zustands des Gebäudeverschlusselements.

Eine Weiterbildung der Erfindung sieht vor, dass das Fehlersignal mittels einer Anzeigevorrichtung angezeigt wird, wobei die Anzeigevorrichtung Bestandteil des Gebäudeverschlusselements ist oder mit dem Gebäudeverschlusselement in Datenübertragungsverbindung steht. Die Anzeigevorrichtung dient dem Anzeigen des Fehlersignals, insbesondere also dem optischen Darstellen desselben. Die Anzeigevorrichtung kann an dem Gebäudeverschlusselement vorliegen beziehungsweise Bestandteil des Gebäudeverschlusselements sein. Sie kann jedoch auch separat von dem Gebäudeverschlusselement vorliegen und insbesondere als von dem Gebäudeverschlusselement verschiedenes Mobilgerät ausgestaltet sein. In diesem Fall steht das Mobilgerät mit dem Gebäudeverschlusselement beziehungsweise der Sensoranordnung in Datenübertragungsverbindung. Diese kann entweder unmittelbar vorliegen oder aber wiederum über die bereits erwähnte Zentralrecheneinrichtung. Dies ermöglicht eine zuverlässige Benachrichtigung des Benutzers über eine mögliche Beeinträchtigung, welche unter Umständen eine Wartung des Gebäudeverschlusselements vonnöten macht.

Eine Weiterbildung der Erfindung sieht vor, dass als Bestandteil des Fehlersignals eine mittels des Positionssensors ermittelte Position des Gebäudeverschlusselements verwendet wird. Die Position wird also zusammen mit dem Fehlersignal ausgesandt, damit im Falle einer notwendigen Wartung der Servicetechniker unmittelbar zu der Position des Gebäudeverschlusselements entsandt werden kann. Hierdurch werden Verzögerungen bei dem Durchführen der Wartung zuverlässig vermieden.

Eine Weiterbildung der Erfindung sieht vor, dass die Sensoranordnung Bestandteil einer Mehrzahl von Sensoranordnungen mehrerer Gebäudeverschlusselemente ist, wobei jede der Sensoranordnungen mindestens einen Zustandsgrößensensor zur Erfassung der Zustandsinformation des jeweiligen Gebäudeverschlusselements aufweist, wobei im Falle einer Wartung eines ersten der Gebäudeverschlusselemente ein Wartungsparameter eingegeben und mit der für das erste Gebäudeverschlusselement ermittelten Zustandsinformation korreliert wird, und wobei anhand der Korrelation für wenigstens ein zweites der Gebäudeverschlusselemente aus dem mittels der jeweiligen Sensoranordnung ermittelten Zustandsinformation der Wartungsparameter bestimmt wird.

Eine solche Vorgehensweise ist insbesondere für die erste Variante sinnvoll anwendbar, da dann eine Kombination der ersten Variante und der zweiten Variante vorliegt. Bevorzugt ist es vorgesehen, bei dem Erzeugen des Fehlersignals aufgrund des Abweichens der ermittelten Zustandsinformation von der hinterlegten Referenzinformation die Wartung vorzunehmen. Im Rahmen der Wartung wird der Wartungsparameter eingegeben, sodass die Korrelation ermittelt oder verbessert werden kann. Nachfolgend ist für ein anderes der Gebäudeverschlusselemente, insbesondere für das zweite Gebäudeverschlusselement, eine zuverlässige Aussage über den Wartungsparameter möglich. Entsprechend kann bereits prädiktiv eine Wartung für dieses Gebäudeverschlusselement veranlasst werden, sofern der Wartungsparameter eine entsprechende Notwendigkeit anzeigt.

Eine Weiterbildung der Erfindung sieht vor, dass das Korrelieren des Wartungsparameters mit der ermittelten Zustandsinformation mittels der Sensoranordnung und/oder einer Zentralrecheneinrichtung erfolgt. Die Sensoranordnung beziehungsweise die Zentralrecheneinrichtung dient insoweit dem Auswerten des Wartungsparameters und der Zustandsinformation mehrerer Sensoranordnungen beziehungsweise mehrerer Gebäudeverschlusselemente. Es kann vorgesehen sein, dass jedes der Gebäudeverschlusselemente eine Sensoranordnung aufweist, jedoch lediglich eines der Gebäudeverschlusselemente die Zentralrecheneinrichtung. Die Zentralrecheneinrichtung ist insoweit einem der Gebäudeverschlusselemente zugeordnet. Bevorzugt ist sie jedoch von allen Gebäudeverschlusselementen beabstandet angeordnet. Insbesondere ist die Zentralrecheneinrichtung ein Rechenzentrum oder zumindest ein Bestandteil eines solchen. Die Sensoranordnungen und die Zentralrecheneinrichtung sind jeweils über eine Datenübertragungsverbindung miteinander verbunden. Das bedeutet, dass zwischen jeder der Sensoranordnungen und der Zentralrecheneinrichtung jeweils eine solche Datenverbindung vorliegt.

Hierbei ist es nicht notwendig, dass die Datenübertragungsverbindung unmittelbar zwischen dem jeweiligen Gebäudeverschlusselement und der Zentralrecheneinrichtung hergestellt ist, wenngleich dies selbstverständlich besonders vorteilhaft ist. Vielmehr kann die Datenübertragungsverbindung zwischen zumindest einem ersten der Gebäudeverschlusselemente und der Zentralrecheneinrichtung auch lediglich mittelbar hergestellt sein, beispielsweise über ein zweites der Gebäudeverschlusselemente. In diesem Fall liegt zwischen dem ersten Gebäudeverschlusselement und dem zweiten Gebäudeverschlusselement eine erste Datenübertragungsverbindung vor und eine zweite Datenübertragungsverbindung ist zwischen dem zweiten Gebäudeverschlusselement und der Zentralrecheneinrichtung hergestellt. Das erste Gebäudeverschlusselement kann nun über die erste Datenübertragungsverbindung und die zweite Datenübertragungsverbindung an die Zentralrecheneinrichtung datentechnisch angebunden sein. Bei Verwendung der Sensoranordnung kann eine dezentrale Auswertung der Korrelation beziehungsweise des Wartungsparameters vorgenommen werden. Die Zentralrecheneinrichtung ermöglicht hingegen eine zentrale Auswertung.

Die Erfindung betrifft weiterhin eine Sensoranordnung für ein Gebäudeverschlusselement, insbesondere zur Durchführung des Verfahrens gemäß den Ausführungen im Rahmen der vorliegenden Beschreibung, wobei die Sensoranordnung wenigstens einen Zustandsgrößensensor zur Erfassung einer Zustandsinformation des Gebäudeverschlusselements aufweist. Dabei ist die Sensoranordnung dazu vorgesehen und ausgestaltet, nach einem Montagevorgang des Gebäudeverschlusselements eine Trainingsbetriebsart durchzuführen, während welcher die Zustandsinformation mittels des Zustandsgrößensensors ermittelt und als Referenzinformation hinterlegt wird, wobei nach dem Hinterlegen der Referenzinformation aus der Trainingsbetriebsart in eine Überwachungsbetriebsart gewechselt wird, während welcher wenigstens einmalig die Zustandsinformation mittels des Zustandsgrößensensors ermittelt und mit der Referenzinformation verglichen wird, wobei bei einem Abweichen der ermittelten Zustandsinformation von der hinterlegten Referenzinformation ein Fehlersignal erzeugt wird.

Auf die Vorteile einer derartigen Vorgehensweise beziehungsweise einer derartigen Ausgestaltung der Sensoranordnung wurde bereits hingewiesen. Sowohl die Sensoranordnung als auch das Verfahren zu ihrem Betreiben können gemäß den Ausführungen im Rahmen dieser Beschreibung weitergebildet sein, sodass insoweit auf diese verwiesen wird.

Selbstverständlich betrifft die Erfindung auch eine Sensoranordnung, welche zur Durchführung des Verfahrens gemäß der zweiten Variante vorgesehen und ausgestaltet ist.

Zusätzlich betrifft die Erfindung ein Gebäudeverschlusselement mit einer Sensoranordnung gemäß den Ausführungen im Rahmen dieser Beschreibung. Erneut wird hinsichtlich der Vorteile und möglicher vorteilhafter Ausgestaltungen auf die weiteren Ausführungen im Rahmen dieser Beschreibung hingewiesen.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Schnittdarstellung eines Gebäudes mit einer Gebäudehülle sowie einem Gebäudeverschlusselement, sowie
- Figur 2: ein Netzwerk mit mehreren Gebäudeverschlusselementen sowie einer Zentralrecheneinrichtung.

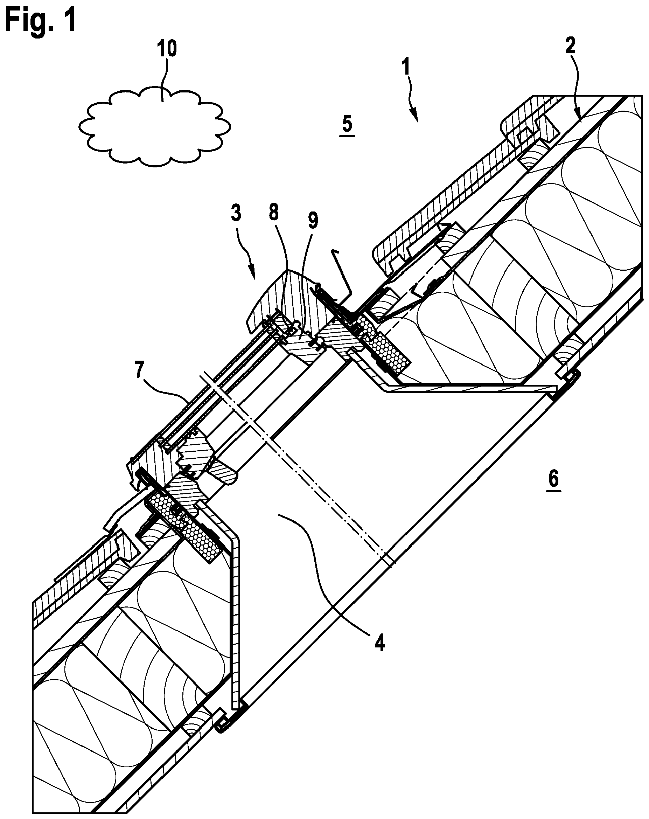

Die Figur 1 zeigt eine schematische Schnittdarstellung eines Gebäudes 1, welches eine Gebäudehülle 2 sowie ein Gebäudeverschlusselement 3 aufweist. Die Gebäudehülle 2 liegt in dem hier dargestellten Ausführungsbeispiel als Dach, insbesondere als Schrägdach, vor. In der Gebäudehülle 2 ist eine Ausnehmung 4 ausgebildet, welche die Gebäudehülle 2 vollständig durchgreift und insoweit eine Außenumgebung 5 des Gebäudes 1 mit einem Innenraum 6 des Gebäudes 1 verbindet, insbesondere strömungstechnisch und/oder optisch beziehungsweise lichttechnisch. Die Ausnehmung 4 ist mit dem Gebäudeverschlusselement 3 verschlossen, insbesondere strömungstechnisch. In dem hier dargestellten Ausführungsbeispiel liegt das Gebäudeverschlusselement 3 als Dachflächenfenster vor, welches über eine Verglasung 7 verfügt, sodass weiterhin eine optische Verbindung zwischen der Außenumgebung 5 und dem Innenraum 6 durch die Ausnehmung 4 hindurch vorliegt.

Das Gebäudeverschlusselement 3 verfügt über eine Sensoranordnung 8, die wenigstens einen Zustandsgrößensensor zur Erfassung einer Zustandsgröße des Gebäudeverschlusselements 3 aufweist. Die Sensoranordnung 8 ist in dem hier dargestellten Ausführungsbeispiel integraler Bestandteil des Gebäudeverschlusselements 3, sie kann jedoch auch von ihm separierbar sein. Sie ist beispielsweise in einen Blendrahmen 9 des Gebäudeverschlusselement 3 integriert. Die Sensoranordnung 8 wird vorzugsweise bereits während eines Transport- und/oder Montagevorgangs des Gebäudeverschlusselements 3 zumindest zeitweise zum Erfassen der Zustandsgröße betrieben. Es kann jedoch auch vorgesehen sein, die Zustandsgröße erst nach dem Transport- und/oder Montagevorgang zu erfassen.

Weiterhin gezeigt ist eine Zentralrecheneinrichtung 10, welche in dem hier dargestellten Ausführungsbeispiel als von dem Gebäudeverschlusselement 3 beabstandet angeordnete Zentralrecheneinrichtung ausgestaltet ist. Die Zentralrecheneinrichtung 10 steht zumindest zeitweise in Datenübertragungsverbindung mit der Sensoranordnung 8. In einer Trainingsbetriebsart der Transport- und/oder Montageüberwachungseinrichtung 10 ist es vorgesehen, dass die Zustandsgröße von der Sensoranordnung 8 an die Zentralrecheneinrichtung 10 übertragen wird. Zudem wird ein das Gebäudeverschlusselement beschreibender Parameter bestimmt und ebenfalls der Zentralrecheneinrichtung 10 zur Verfügung gestellt. Das Bestimmen des Parameters beziehungsweise seines Werts erfolgt beispielsweise durch manuelle Eingabe, beispielsweise an einem Mobilgerät.

Die Zentralrecheneinrichtung 10 ermittelt aus dem Parameter und der Zustandsgröße beziehungsweise dem Zustandsgrößenverlauf eine Korrelation. Diese wird zwischengespeichert. Vorzugsweise wird der Zentralrecheneinrichtung 10 der Parameter sowie die Zustandsgröße beziehungsweise der Zustandsgrößenverlauf nicht nur von dem einen Gebäudeverschlusselement 3, sondern jeweils von einer Mehrzahl an Gebäudeverschlusselementen 3. Wurden während der Trainingsbetriebsart hinreichend Wartungsparameter sowie Zustandsinformation erfasst und bei der Ermittlung der Korrelation berücksichtigt, so wird von von der Trainingsbetriebsart auf eine Überwachungsbetriebsart umgeschaltet. In dieser wird die Korrelation verwendet, um aus einer von der Sensoranordnung 8 übermittelten Zustandsinformation auf den Wert des Wartungsparameters für diese Sensoranordnung 8 beziehungsweise das entsprechende Gebäudeverschlusselement 3 zu schließen.

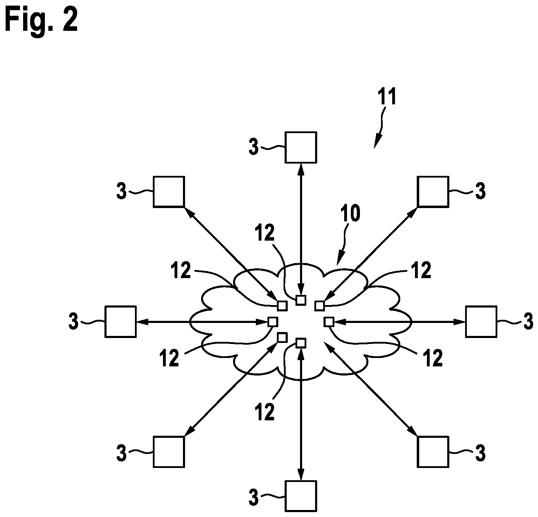

Die Figur 2 zeigt eine schematische Darstellung eines Netzwerks 11, das die Zentralrecheneinrichtung 10 und zusätzlich zu dem Gebäudeverschlusselement 3 weitere Gebäudeverschlusselemente 3 aufweist. In der Zentralrecheneinrichtung 10 ist für jedes der Gebäudeverschlusselemente 3 ein Gebäudeverschlussdatensatz 12 hinterlegt. Die Gebäudeverschlussdatensätze 12 enthalten jeweils die Zustandsinformation, die beispielsweise in Form des Zustandsgrößenverlaufs vorliegt und insoweit den Verlauf des Werts der Zustandsgröße über der Zeit wiedergibt. Aus der Zustandsinformation und dem bereits erwähnten Wartungsparameter beziehungsweise wenigstens einem Wert dieses Wartungsparameters ermittelt die Zentralrecheneinrichtung 10 eine Korrelation. Liegt die Korrelation vor, so kann anhand dieser aus der jeweiligen Zustandsinformation auf den Wert des Wartungsparameters geschlossen werden. Anhand des Wartungsparameters wird nachfolgend eine Information für ein bestimmtes Gebäudeverschlusselement 3 ermittelt und an dieses oder ein Mobilgerät übermittelt. Dort wird beispielsweise die Information beziehungsweise der Wartungsparameter einem Benutzer des Gebäudeverschlusselements 3 angezeigt.

Hierdurch wird eine vorausschauende Wartung des Gebäudeverschlusselements 3 auf Grundlage einer großen Datenbasis ermöglicht, da nicht nur die Zustandsinformation eines Gebäudeverschlusselements 3 und der Wartungsparameter herangezogen werden, sondern die Wartungsparameter und Zustandsinformationen mehrerer der Gebäudeverschlusselements 3 in die Betrachtung einbezogen werden.

### BEZUGSZEICHENLISTE

- 1: Gebäude
- 2: Gebäudehülle
- 3: Gebäudeverschlusselement
- 4: Ausnehmung
- 5: Außenumgebung
- 6: Innenraum
- 7: Verglasung
- 8: Sensoranordnung
- 9: Blendrahmen
- 10: Zentralrecheneinrichtung
- 11: Netzwerk
- 12: Gebäudeverschlussdatensatz

## Patentansprüche

1. Verfahren zum Betreiben einer Sensoranordnung (8) eines Gebäudeverschlusselements (3), wobei die Sensoranordnung (8) wenigstens einen Zustandsgrößensensor zur Erfassung einer Zustandsinformation des Gebäudeverschlusselements (3) aufweist, **dadurch gekennzeichnet, dass** nach einem Montagevorgang des Gebäudeverschlusselements (3) eine Trainingsbetriebsart durchgeführt wird, während welcher die Zustandsinformation mittels des Zustandsgrößensensors ermittelt und als Referenzinformation hinterlegt wird, wobei nach dem Hinterlegen der Referenzinformation aus der Trainingsbetriebsart in eine Überwachungsbetriebsart gewechselt wird, während welcher wenigstens einmalig die Zustandsinformation mittels des Zustandsgrößensensors ermittelt und mit der Referenzinformation verglichen wird, wobei bei einem Abweichen der ermittelten Zustandsinformation von der hinterlegten Referenzinformation ein Fehlersignal erzeugt wird.

2. Verfahren zum Betreiben eines Netzwerks (11) aus Sensoranordnungen (8) mehrerer Gebäudeverschlusselemente (3), wobei jede der Sensoranordnungen (8) jeweils wenigstens einen Zustandsgrößensensor zur Erfassung einer Zustandsinformation des Gebäudeverschlusselements (3) aufweist, **dadurch gekennzeichnet, dass**, insbesondere nach einem jeweiligen Montagevorgang, für die Gebäudeverschlusselemente (3) mit Hilfe der jeweiligen Sensoranordnung (8) die jeweilige Zustandsinformation des entsprechenden Gebäudeverschlusselements (3) ermittelt wird, wobei im Falle einer Wartung eines ersten der Gebäudeverschlusselemente (3) ein Wartungsparameter erfasst und mit der für das erste Gebäudeverschlusselement (3) ermittelten Zustandsinformation korreliert wird, und wobei anhand der Korrelation für wenigstens ein zweites der Gebäudeverschlusselemente (3) aus dem mittels der jeweiligen Sensoranordnung (8) ermittelten Zustandsinformation der Wartungsparameter bestimmt wird.

3. Verfahren nach Anspruch 1 oder 2, **dadurch gekennzeichnet, dass** als Zustandsinformation ein mittels des Zustandsgrößensensors gemessener Wert einer Zustandsgröße oder ein mittels des Zustandsgrößensensors ermittelter Zustandsgrößenverlauf verwendet wird.

4. Verfahren nach einem der vorhergehenden Ansprüche, **dadurch gekennzeichnet, dass** das Gebäudeverschlusselement (3) einen ersten Rahmen und einen bezüglich des ersten Rahmens verlagerbaren zweiten Rahmen aufweist, wobei sowohl während der Trainingsbetriebsart als auch während der Überwachungsbetriebsart die Zustandsinformation während eines Verlagerns des zweiten Rahmens bezüglich des ersten Rahmens ermittelt wird.

5. Verfahren nach einem der vorhergehenden Ansprüche, **dadurch gekennzeichnet, dass** der zweite Rahmen zumindest zeitweise mittels eines Aktuators bezüglich des ersten Rahmens verlagert wird.

6. Verfahren nach einem der vorhergehenden Ansprüche, **dadurch gekennzeichnet, dass** mittels des Zustandsgrößensensors eine als Zustandsinformation verwendete Zeitdauer ermittelt wird, die zum Verlagern des zweiten Rahmens bezüglich des ersten Rahmens aus einer ersten Stellung bis in eine zweite Stellung benötigt wird.

7. Verfahren nach einem der vorhergehenden Ansprüche, **dadurch gekennzeichnet, dass** der erste Rahmen und der zweite Rahmen über wenigstens ein Federelement mechanisch miteinander gekoppelt sind, das bei unterschiedlichen Stellungen der Rahmen zueinander unterschiedliche Federspannungen aufweist, wobei während des Verlagerns des zweiten Rahmens bezüglich des ersten Rahmens eine Zustandsinformation des Aktuators als Zustandsinformation ermittelt wird.

8. Verfahren nach einem der vorhergehenden Ansprüche, **dadurch gekennzeichnet, dass** mithilfe des als Beschleunigungssensor ausgestalteten Zustandsgrößensensors ein Schwerkraftvektor ermittelt und als Zustandsinformation verwendet wird.

9. Verfahren nach einem der vorhergehenden Ansprüche, **dadurch gekennzeichnet, dass** mithilfe des als Positionssensor ausgestalteten Zustandsgrößensensors eine Position des Gebäudeverschlusselements (3) ermittelt und als Zustandsinformation verwendet wird.

10. Verfahren nach einem der vorhergehenden Ansprüche, **dadurch gekennzeichnet, dass** das Gebäudeverschlusselement (3) mit wenigstens einem weiteren Gebäudeverschlusselement (3) in Datenübertragungsverbindung steht, wobei bei dem Abweichen der ermittelten Zustandsinformation von der hinterlegten Referenzinformation nur für das Gebäudeverschlusselement (3) ein erstes Fehlersignal als Fehlersignal und bei dem Abweichen der ermittelten Zustandsinformation von der hinterlegten Referenzinformation sowohl für das Gebäudeverschlusselement (3) als auch für das weitere Gebäudeverschlusselement (3) ein zweites Fehlersignal als Fehlersignal verwendet wird.

11. Verfahren nach einem der vorhergehenden Ansprüche, **dadurch gekennzeichnet, dass** mittels eines auf einer ersten Seite des Gebäudeverschlusselements (3) angeordneten Schallemitters Schall mit einer bestimmten Schallintensität emittiert und mittels des als Geräuschsensor ausgestalteten Zustandsgrößensensors ein Geräuschpegel des Schalls auf einer der ersten Seite abgewandten zweiten Seite des Gebäudeverschlusselements (3) ermittelt und als Zustandsinformation verwendet wird.

12. Verfahren nach einem der vorhergehenden Ansprüche, **dadurch gekennzeichnet, dass** die Sensoranordnung (8) Bestandteil einer Mehrzahl von Sensoranordnungen (8) mehrerer Gebäudeverschlusselemente (3) ist, wobei jede der Sensoranordnungen (8) wenigstens einen Zustandsgrö-ßensensor zur Erfassung der Zustandsinformation des jeweiligen Gebäudeverschlusselements (3) aufweist, wobei im Falle einer Wartung eines ersten der Gebäudeverschlusselemente (3) ein Wartungsparameter eingegeben und mit der für das erste Gebäudeverschlusselement (3) ermittelten Zustandsinformation korreliert wird, und wobei anhand der Korrelation für wenigstens ein zweites der Gebäudeverschlusselemente (3) aus dem mittels der jeweiligen Sensoranordnung (8) ermittelten Zustandsinformation der Wartungsparameter bestimmt wird.

13. Verfahren nach einem der vorhergehenden Ansprüche, **dadurch gekennzeichnet, dass** das Korrelieren des Wartungsparameters mit der ermittelten Zustandsinformation mittels der Sensoranordnung (8) und/oder einer Zentralrecheneinrichtung (10) erfolgt.

14. Sensoranordnung (8) für ein Gebäudeverschlusselement (3), insbesondere zur Durchführung des Verfahrens nach einem oder mehreren der vorhergehenden Ansprüche, wobei die Sensoranordnung (8) wenigstens einen Zustandsgrößensensor zur Erfassung einer Zustandsinformation des Gebäudeverschlusselements (3) aufweist, **dadurch gekennzeichnet, dass** die Sensoranordung dazu vorgesehen und ausgestaltet ist, nach einem Montagevorgang des Gebäudeverschlusselements (3) eine Trainingsbetriebsart durchzuführen, während welcher die Zustandsinformation mittels des Zustandsgrößensensors ermittelt und als Referenzinformation hinterlegt wird, wobei nach dem Hinterlegen der Referenzinformation aus der Trainingsbetriebsart in eine Überwachungsbetriebsart gewechselt wird, während welcher wenigstens einmalig die Zustandsinformation mittels des Zustandsgrößensensors ermittelt und mit der Referenzinformation verglichen wird, wobei bei einem Abweichen der ermittelten Zustandsinformation von der hinterlegten Referenzinformation ein Fehlersignal erzeugt wird.

15. Gebäudeverschlusselement (3) mit einer Sensoranordnung (8) nach Anspruch 14.
